(19) Europäisches Patentamt
European Patent Office
Office européen des brevets

(11) **EP 3 961 761 A1**

(12) **EUROPEAN PATENT APPLICATION**
published in accordance with Art. 153(4) EPC

(43) Date of publication:
**02.03.2022 Bulletin 2022/09**

(21) Application number: **20795546.9**

(22) Date of filing: **09.04.2020**

(51) International Patent Classification (IPC):
$H01M\ 4/134^{(2010.01)}$    $H01M\ 4/38^{(2006.01)}$
$H01M\ 10/052^{(2010.01)}$    $H01M\ 10/0566^{(2010.01)}$
$H01M\ 2/02^{(2006.01)}$

(52) Cooperative Patent Classification (CPC):
**H01M 4/134; H01M 4/38; H01M 10/052;
H01M 10/0566; H01M 50/10;** Y02E 60/10

(86) International application number:
**PCT/JP2020/015935**

(87) International publication number:
**WO 2020/218002 (29.10.2020 Gazette 2020/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.04.2019 JP 2019083887**

(71) Applicant: **SUMITOMO CHEMICAL COMPANY
LIMITED
Chuo-ku
Tokyo 104-8260 (JP)**

(72) Inventors:
• **YAMAGUCHI, Takitaro
Tsukuba-shi, Ibaraki 300-3294 (JP)**
• **HOSHIKAWA, Hiroaki
Niihama-shi, Ehime 792-8521 (JP)**

(74) Representative: **Vossius & Partner
Patentanwälte Rechtsanwälte mbB
Siebertstraße 3
81675 München (DE)**

(54) **NON-AQUEOUS ELECTROLYTE SECONDARY BATTERY**

(57) A non-aqueous electrolyte secondary battery including an electrode group provided with a current collector-integrated anode for a secondary battery, an electrolyte, and a cathode, in which an anode capacity of the current collector-integrated anode for a secondary battery is larger than a cathode capacity of the cathode, the current collector-integrated anode for a secondary battery is a metal foil made of aluminum having a purity of 99 mass% or more or an alloy thereof, and the metal foil has an oxide coating on a surface.

FIG. 2

**Description**

**[Technical Field]**

The present invention relates to a non-aqueous electrolyte secondary battery.
Priority is claimed on Japanese Patent Application No. 2019-083887, filed in Japan on April 25, 2019, the content of which is incorporated herein by reference.

**[Background Art]**

Attempts of putting chargeable secondary batteries into practical use not only for small-sized power sources in mobile phone applications, notebook personal computer applications, and the like but also for medium-sized or large-sized power sources in automotive applications, power storage applications, and the like have already been underway.
An anode that configures an ordinary secondary battery is produced by supporting an anode mixture containing an anode active material and a binder by an anode current collector.
In the middle of the expansion of the application of secondary batteries into a broad range of fields, there is a demand for simplification of producing steps as well as improvement in the battery performance of secondary batteries.
For example, Patent Document 1 describes a bipolar battery in which structures each having a cathode layer on one surface of an anode current collector capable of serving as both a current collector and an anode active material are laminated through a solid electrolyte layer.

**[Citation List]**

**[Patent Document]**

**[Patent Document 1]**

Japanese Unexamined Patent Application, First Publication No. 2015-18670

**[Summary of Invention]**

**[Technical Problem]**

The bipolar battery described in Patent Document 1 is capable of simplifying producing steps, but cannot be said to have sufficient battery performance.
The present invention has been made in view of such circumstances, and an object of the present invention is to provide a non-aqueous electrolyte secondary battery that can be produced without undergoing a complicated producing step and has a high initial charge and discharge efficiency.

**[Solution to Problem]**

The present invention includes the following [1] to [8].

[1] A non-aqueous electrolyte secondary battery including an electrode group provided with a current collector-integrated anode for a secondary battery, an electrolyte, and a cathode, in which an anode capacity of the current collector-integrated anode for a secondary battery is larger than a cathode capacity of the cathode, the current collector-integrated anode for a secondary battery is a metal foil made of aluminum having a purity of 99 mass% or more or an alloy thereof, and the metal foil has an oxide coating on a surface.
[2] The non-aqueous electrolyte secondary battery according to [1], in which a thickness of the oxide coating is 3 nm or more and less than 100 nm.
[3] The non-aqueous electrolyte secondary battery according to [1] or [2], in which the anode capacity of the current collector-integrated anode for a secondary battery and the cathode capacity of the cathode satisfy the following (Equation 1). (Anode capacity (mAh) / Cathode capacity (mAh)) > 110% ... (Equation 1)
[4] The non-aqueous electrolyte secondary battery according to any one of [1] to [3], in which the anode capacity of the current collector-integrated anode for a secondary battery and the cathode capacity of the cathode satisfy the following (Equation 2). (Anode capacity (mAh) / Cathode capacity (mAh)) < 25000% ... (Equation 2)
[5] The non-aqueous electrolyte secondary battery according to any one of [1] to [4], in which the current collector-integrated anode for a secondary battery serves as an exterior body.

[6] The non-aqueous electrolyte secondary battery according to any one of [1] to [5], further including an organic electrolytic solution in which the electrolyte is dissolved in a non-aqueous organic solvent.

[7] The non-aqueous electrolyte secondary battery according to any one of [1] to [6], further including a separator between the current collector-integrated anode for a secondary battery and the cathode.

[8] The non-aqueous electrolyte secondary battery according to any one of [1] to [7], in which the electrolyte is a solid electrolyte, the cathode has voids on a surface in contact with the solid electrolyte, and some of the voids are filled with a material that configures the solid electrolyte.

**[Advantageous Effects of Invention]**

According to the present invention, it is possible to provide a non-aqueous electrolyte secondary battery that can be produced without undergoing a complicated producing step and has a high initial charge and discharge efficiency.

**[Brief Description of Drawings]**

Fig. 1A is a schematic configuration view showing an example of a non-aqueous electrolyte secondary battery.

Fig. 1B is a schematic configuration view showing the example of the non-aqueous electrolyte secondary battery.

Fig. 2 is a schematic view of a cross section of an example of the non-aqueous electrolyte secondary battery.

**[Description of Embodiments]**

In the present specification, "initial charge and discharge efficiency" means a capacity ratio having the initial charge capacity as the denominator and the initial discharge capacity as the numerator.

In the present specification, "charging" means a reaction by which aluminum in an anode and lithium are alloyed.

In the present specification, "discharging" means a reaction by which lithium is released from aluminum in the anode.

<Non-aqueous electrolyte secondary battery>

A non-aqueous electrolyte secondary battery of the present embodiment will be described.

[Overall configuration]

The non-aqueous electrolyte secondary battery of the present embodiment includes an electrode group. The electrode group includes a current collector-integrated anode for a secondary battery, an electrolyte, and a cathode.

An example of the non-aqueous electrolyte secondary battery is a non-aqueous electrolytic solution-type secondary battery or a solid electrolyte-type secondary battery.

The non-aqueous electrolytic solution-type secondary battery is a battery in which an electrolytic solution is used as the electrolyte. In addition, the solid electrolyte-type secondary battery is a battery in which a solid electrolyte is used as the electrolyte.

Hereinafter, a non-aqueous electrolytic solution-type secondary battery in which a lithium cathode active material is used will be described as an example.

[Current collector-integrated anode for a secondary battery]

Hereinafter, there will be cases where "current collector-integrated anode for a secondary battery" is abbreviated as "current collector-integrated anode".

The current collector-integrated anode serves as an anode. In addition, the current collector-integrated anode serves as an anode current collector. That is, the current collector-integrated anode also serves as both an anode and a current collector. That is, according to a current collector-integrated anode of the present embodiment, it becomes unnecessary to use a separate current collector member.

Furthermore, in the producing step of a secondary battery, a step of supporting an anode active material by a current collector becomes unnecessary.

Here, in a case where an anode active material is supported by a current collector, which is a separate member, there is a problem in that the anode active material layer easily peels off from the current collector.

In the present embodiment, since the current collector and the anode are integrated together to become a single member, there is an advantage that the problem of peeling between the current collector and the anode active material layer does not occur from the beginning.

A metal foil that configures the current collector-integrated anode includes an anode that is involved in charging and discharging and functions as the anode.

The metal foil that configures the current collector-integrated anode includes a current collector that is made of a surplus metal component that is not involved in charging and discharging and functions as the current collector.

An example of the configuration of the non-aqueous electrolytic secondary battery of the present embodiment includes an electrode group in an exterior body. In the electrode group, the current collector-integrated anode and a cathode are disposed through a separator.

In the case of such a configuration, in the current collector-integrated anode, a surface that is in contact with the cathode functions as an anode surface, and a surface made of a metal component that is not involved in charging and discharging as the anode functions as a current collector surface.

In the present embodiment, the thickness of the current collector-integrated anode is preferably 5 $\mu$m or more, more preferably 6 $\mu$m or more, and still more preferably 7 $\mu$m or more. In addition, the thickness of the current collector-integrated anode is preferably 200 $\mu$m or less, more preferably 190 $\mu$m or less, and particularly preferably 180 $\mu$m or less.

The upper limit value and the lower limit value of the thickness can be randomly combined.

In the present embodiment, the thickness of the current collector-integrated anode is preferably 5 $\mu$m or more and 200 $\mu$m or less, more preferably 6 $\mu$m or more and 190 $\mu$m or less, and particularly preferably 7 $\mu$m or more and 180 $\mu$m or less.

In a case where the current collector-integrated anode also serves as the exterior body of the battery, the upper limit of the thickness of the current collector-integrated anode is preferably 1000 $\mu$m or less, more preferably 400 $\mu$m or less, and still more preferably 300 $\mu$m or less. In a case where the current collector-integrated anode also serves as the exterior body of the battery, the lower limit of the thickness of the current collector-integrated anode is preferably 100 $\mu$m or more, more preferably 150 $\mu$m or more, and particularly preferably 200 $\mu$m or more.

In a case where the current collector-integrated anode also serves as the battery exterior, the thickness of the current collector-integrated anode is preferably 100 $\mu$m or more and 1000 $\mu$m or less, more preferably 150 $\mu$m or more and 400 $\mu$m or less, and particularly preferably 200 $\mu$m or more and 300 $\mu$m or less.

In the present embodiment, the thickness of the current collector-integrated anode can be measured using a thickness gauge or a caliper.

In the present specification, the thickness of the current collector-integrated anode means the average value of the thicknesses of the current collector-integrated anode measured at five points at intervals of 5 mm.

In the present embodiment, the metal foil that configures the current collector-integrated anode includes an oxide coating on a surface.

In the present embodiment, the metal foil may include the oxide coating only on the anode surface or may include the oxide coatings on both the anode surface and the current collector surface. Furthermore, on each surface, that the oxide coating is preferably formed on the entire surface, and the thickness of the oxide coating is more preferably uniform.

In the present embodiment, in a case where the thickness of the oxide coating present on the surface of the metal foil is 7 nm or less, the thickness of the oxide coating can be measured using X-ray photoelectron spectroscopy (XPS).

In addition, in a case where the thickness of the oxide coating present on the surface of the metal foil exceeds 7 nm, the thickness of the oxide coating can be measured with a spectroscopic ellipsometer.

Measurement by the above-described methods makes it possible to confirm the presence and thickness of the oxide coating.

In the present embodiment, "the thickness of the oxide coating" means the average value of the thicknesses of the oxide coating measured at five points at intervals of 5 mm using the above-described measuring device.

When a non-aqueous electrolytic solution comes into direct contact with the anode having no oxide coating or having an oxide coating that is less than 3 nm in thickness, the non-aqueous electrolytic solution is reductively decomposed during charging. The amount of charged electricity is consumed when reductive decomposition occurs.

When the oxide coating is formed on the surface of the current collector-integrated anode, it is possible to suppress the non-aqueous electrolytic solution coming into direct contact with the anode. Therefore, the reductive decomposition of the non-aqueous electrolytic solution can be suppressed. That is, when the non-aqueous electrolytic solution and the anode come into contact with each other during charging, the consumption of the amount of charged electricity is suppressed. Therefore, the initial capacity is likely to be maintained, and a non-aqueous electrolytic secondary battery having a high initial charge and discharge efficiency can be provided.

In the present embodiment, the thickness of the oxide coating is preferably 3 nm or more and less than 100 nm, more preferably 5 nm or more and 60 nm or less, and particularly preferably 10 nm or more and 40 nm or less.

When the thickness of the oxide coating is within the above-described range, the reductive decomposition of the non-aqueous electrolytic solution can be suppressed. As a result, it is possible to suppress the generation of acid that may cause deterioration of the non-aqueous electrolyte secondary battery.

Ordinarily, metal is oxidized by natural oxidation, and an oxide coating can be formed on the surface of metal. The thickness of an oxide coating that is formed by natural oxidation is ordinarily approximately 1 nm to less than 3 nm. Since the metal foil that is used in the present embodiment is produced by a producing method described below, an oxide coating having a large thickness that is not formed by natural oxidation is provided on the surface.

(Metal foil)

In the present embodiment, the current collector-integrated anode is a metal foil made of aluminum having a purity of 99% or more or an alloy thereof. Hereinafter, there will be cases where a metal foil made of an aluminum foil having a purity of 99% or more and an alloy of aluminum having a purity of 99% or more is referred to as "metal foil".

In the present specification, "alloy of aluminum having a purity of 99% or more" means an alloy in which the content rate of aluminum is 99% or more.

• Aluminum

Aluminum that is used for the metal foil of the present embodiment will be described.

The aluminum that is used for the current collector-integrated anode of the present embodiment has a purity of 99 mass% or more, and the purity is preferably 99.9 mass% or more, more preferably 99.95 mass% or more, and particularly preferably 99.99 mass% or more.

As a refining method for purifying aluminum to the above-described purity, for example, a segregation method and a three-layer electrolysis method can be exemplified.

•• Segregation method

The segregation method is a purification method in which a segregation phenomenon during the solidification of molten aluminum is used, and a plurality of methods have been put into practical use. One form of the segregation method is a method in which molten aluminum is poured into a container, the molten aluminum in the upper portion is heated and stirred while rotating the container, and purified aluminum is solidified from the bottom portion. Aluminum having a purity of 99 mass% or more can be obtained by the segregation method.

•• Three-layer electrolysis method

As one form of the three-layer electrolysis method, first, aluminum or the like is injected into an Al-Cu alloy layer. As the aluminum to be injected, for example, aluminum base metal according to the standards of JIS-H 2102 that is aluminum having a purity of 99 mass% is an exemplary example.

In the method, after that, the aluminum is used as an anode in a molten state, for example, an electrolytic bath containing aluminum fluoride, barium fluoride, and the like is disposed on the anode, and highly pure aluminum is obtained in a cathode.

Aluminum having a high purity of 99.999 mass% or more can be obtained by the three-layer electrolysis method.

The refining method for purifying aluminum is not limited to the segregation method and the three-layer electrolysis method and may be other methods that are already known such as a zone melt refining method and an ultra-high vacuum solubility producing method may be used.

• Aluminum alloy

In the present embodiment, the metal foil may be an aluminum alloy containing aluminum.

In the present embodiment, the aluminum that is used for the aluminum alloy has a purity of 99 mass% or more, and the purity is preferably 99.9 mass% or more, more preferably 99.95 mass% or more, and particularly preferably 99.99 mass% or more.

An element that is added to aluminum in order to form the aluminum alloy is preferably one or more selected from the group consisting of Ca, Sr, Ba, Ra, Ni, Mn, Zn, Cd, Pb, Si, Ge, Sn, Ag, Sb, Bi, In and Mg.

The element that is added to aluminum is, particularly, preferably a metal of Group 14 of the periodic table, preferably silicon or tin, and more preferably silicon.

In the case of forming an alloy of aluminum and a metal of Group 14 of the periodic table, the content rate of the metal of Group 14 of the periodic table is preferably 0.1 mass% or more, more preferably 0.5 mass% or more, and still more preferably 0.7 mass% or more with respect to the total amount of the aluminum alloy.

In addition, the content rate of the metal of Group 14 of the periodic table that is contained in the total amount of the aluminum alloy is 1.0 mass% or less, more preferably 0.9 mass% or less, and still more preferably 0.8 mass% or less with respect to the total amount of the aluminum alloy.

The upper limit value and the lower limit value of the content rate of the metal of Group 14 of the periodic table can be randomly combined. In the present embodiment, the content rate of the metal of Group 14 of the periodic table that is contained in the total amount of the aluminum alloy is preferably 0.1 mass% or more and 1.0 mass% or less, more preferably 0.5 mass% or more and 0.9 mass% or less, and particularly preferably 0.7 mass% or more and 0.8 mass% or less.

In the aluminum alloy, the total content rate of aluminum, the metal of Group 14 of the periodic table, and a metal component excluding Ca, Sr, Ba, Ra, Ni, Mn, Zn, Cd, Ag, Sb, Bi, In, and Mg is preferably 0.1 mass% or less, more preferably 0.05 mass% or less, and still more preferably 0.01 mass% or less with respect to the total amount of the aluminum alloy.

[Method for producing current collector-integrated anode]

The current collector-integrated anode can be produced by a producing method including a casting step, a foil shape-processing step, and a thermal treatment step in this order.

• Casting step

In the casting step, first, for example, aluminum is melted at a temperature of approximately 680°C or higher and 800°C or lower to obtain molten aluminum.

In the case of producing an aluminum alloy, molten aluminum alloy is obtained by adding a predetermined amount of a metal element such as the metal of Group 14 of the periodic table at the time of melting.

Next, it is preferable to carry out a treatment for purifying the molten aluminum or the molten aluminum alloy by removing gas and a non-metal inclusion.

As the treatment for purifying, for example, the addition of flux, a treatment in which an inert gas or chlorine gas is blown, and a vacuum treatment of the molten aluminum or the molten aluminum alloy are exemplary examples.

The vacuum treatment is carried out under the conditions of, for example, 700°C or higher and 800°C or lower, one hour or longer and 10 hours or lower, and a vacuum degree of 0.1 Pa or higher and 100 Pa or lower.

The molten aluminum or molten aluminum alloy that has been purified by vacuum treatment or the like is usually cast in a casting mold to produce an aluminum ingot or an aluminum alloy ingot.

As the casting mold, an iron or graphite casting mold heated to 50°C or higher and 200°C or lower is used. The aluminum ingot or aluminum alloy ingot is cast by a method in which the molten aluminum or molten aluminum alloy at 680°C or higher and 800°C or lower is poured into the casting mold. In addition, the ingot can also be obtained by continuously casting, which is ordinarily used.

• Foil shape-processing step

The obtained aluminum ingot or aluminum alloy ingot is processed into a foil shape by rolling, extrusion, forging, or the like to become a metal foil raw material.

In the rolling of the ingot, for example, hot rolling and cold rolling are carried out to process the aluminum ingot or aluminum alloy ingot into a foil shape.

As the temperature condition for carrying out hot rolling, for example, heating the aluminum ingot or aluminum alloy ingot to a temperature of 350°C or higher and 450°C or lower is an exemplary example.

In the rolling, the material is repeatedly passed between a pair of rolling rolls to roll the material to a target thickness. In the present specification, passing the material between the pair of rolling rolls will be referred to as "pass".

r (%) that is the processing rate per pass is the reduction rate of the thickness when the material is passed between the rolling rolls once and is calculated by the following equation.

$$r\ (\%) = (T_0 - T)/T_0 \times 100$$

($T_0$: thickness of aluminum ingot or aluminum alloy ingot before being passed between rolling rolls, T: thickness of aluminum ingot or aluminum alloy ingot after being passed between rolling rolls)

In the present embodiment, it is preferable to repeatedly roll the aluminum ingot or the aluminum alloy ingot until the target thickness is obtained under a condition that r, which is the processing rate, is 2% or more and 20% or less.

After hot rolling and before cold rolling, an intermediate annealing treatment may be carried out.

In the intermediate annealing treatment, for example, the temperature of the hot-rolled aluminum ingot or aluminum alloy ingot may be increased to 350°C or higher and 450°C or lower by heating, and the hot-rolled aluminum ingot or aluminum alloy ingot may be naturally cooled immediately after the increase in temperature.

In addition, the aluminum ingot or the aluminum alloy ingot may be held at the heated temperature for approximately one hour or longer and five hours or shorter and then naturally cooled.

The intermediate annealing treatment softens the material of the aluminum ingot or aluminum alloy ingot, whereby a state in which the aluminum ingot or aluminum alloy ingot is easily cold-rolled is obtained.

Cold rolling is carried out, for example, at a temperature lower than the recrystallization temperature of the aluminum ingot or aluminum alloy ingot. The cold rolling is repeatedly carried out until the aluminum ingot becomes the target thickness, for example, at a temperature of room temperature (23°C) to 80°C or lower under a condition that r, which is the processing rate per pass, is 1% or more and 10% or less.

• Thermal treatment step

When the metal foil raw material obtained in the foil shape-processing step is thermally treated, an oxide coating is formed on the surface of the metal foil.

The thermal treatment step can be carried out in the atmosphere or an oxygen atmosphere. In addition, the thermal treatment step may be carried out in an atmosphere in which the oxygen concentration is controlled to 0.1% or more and 3% or less in a nitrogen atmosphere. In the present embodiment, from the viewpoint of uniformly forming the oxide coating, the thermal treatment step is preferably carried out in the atmosphere and more preferably carried out in a dry atmosphere.

The thermal treatment temperature in the thermal treatment step is preferably 200°C or higher and 600°C or lower, more preferably 250°C or higher and 550°C or lower, and particularly preferably 350°C or higher and 500°C or lower.

The thermal treatment time in the thermal treatment step is preferably 60 minutes or longer and 1200 minutes or shorter, more preferably 120 minutes or longer and 600 minutes or shorter, and particularly preferably 180 minutes or longer and 480 minutes or shorter.

When the thermal treatment step is carried out for a sufficient time as described above, an oxide coating having a uniform thickness can be formed.

In addition, when the thermal treatment temperature is adjusted to the above-described range, it is easy to control the thickness of the oxide coating to be 3 nm or more.

[Cathode]

The cathode can be produced by, first, adjusting a cathode mixture containing a cathode active material, a conductive material, and a binder and supporting the cathode mixture by a cathode current collector.

(Cathode active material)

As a cathode active material, a material made of a lithium-containing compound or a different metal compound can be used. As the lithium-containing compound, for example, a lithium cobalt composite oxide having a layered structure, a lithium nickel composite oxide having a layered structure, and a lithium manganese composite oxide having a spinel structure are exemplary examples.

In addition, as the different metal compound, for example, an oxide such as titanium oxide, vanadium oxide, or manganese dioxide or a sulfide such as titanium sulfide or molybdenum sulfide is an exemplary example.

(Conductive material)

As the conductive material in the cathode, a carbon material can be used. As the carbon material, graphite powder, carbon black (for example, acetylene black), a fibrous carbon material, and the like can be exemplary examples. Carbon black is fine particles and has a large surface area. Therefore, the addition of a small amount of carbon black to the cathode mixture makes it possible to enhance the conductivity inside the cathode and to improve the charge efficiency, the discharge efficiency, and the output characteristics. On the other hand, when the amount of carbon black added is too large, both the binding force between the cathode mixture by the binder and the cathode current collector and the binding force inside the cathode mixture decrease, which conversely causes an increase in internal resistance.

The proportion of the conductive material in the cathode mixture is preferably 5 parts by mass or more and 20 parts by mass or less with respect to 100 parts by mass of the cathode active material. In the case of using a fibrous carbon material such as a graphitized carbon fiber or a carbon nanotube as the conductive material, it is also possible to decrease the proportion of the conductive material in the cathode mixture.

(Binder)

As the binder in the cathode, a thermoplastic resin can be used. As this thermoplastic resin, fluororesins such as polyvinylidene fluoride, polytetrafluoroethylene, tetrafluoroethylene-hexafluoropropylene-vinylidene fluoride-based copolymers, hexafluoropropylene-vinylidene fluoride-based copolymers, and tetrafluoroethylene-perfluorovinyl ether-based copolymers; and polyolefin resins such as polyethylene and polypropylene can be exemplary examples.

Two or more of these thermoplastic resins may be used in a mixture form. When a fluororesin and a polyolefin resin are used as the binder, the proportion of the fluororesin in the entire cathode mixture is set to 1 mass% or more and 10 mass% or less, and the proportion of the polyolefin resin is set to 0.1 mass% or more and 2 mass% or less, whereby it is possible to obtain a cathode mixture having both a high adhesive force to the cathode current collector and a high bonding force inside the cathode mixture.

(Cathode current collector)

As the cathode current collector in the cathode of the present embodiment, a thin film-shaped member formed of a metal material such as Al, Ni, or stainless steel as a forming material can be used. Among these, from the viewpoint of easy processing and low costs as a current collector, a cathode current collector that contains Al as the forming material and is processed into a thin film shape is preferable.

As a method for supporting the cathode mixture by the cathode current collector, a method in which the cathode mixture is formed by pressurization on the cathode current collector is an exemplary example. In addition, the cathode mixture may be supported by the cathode current collector by preparing a paste of the cathode mixture using an organic solvent, applying and drying the paste of the cathode mixture to be obtained on at least one surface side of the cathode current collector, and fixing the cathode mixture by pressing.

As the organic solvent that can be used in the case of preparing the paste of the cathode mixture, an amine-based solvent such as N,N-dimethylaminopropylamine or diethylenetriamine; an ether-based solvent such as tetrahydrofuran; a ketone-based solvent such as methyl ethyl ketone; an ester-based solvent such as methyl acetate; and an amide-based solvent such as dimethylacetamide or N-methyl-2-pyrrolidone are exemplary examples.

As a method for applying the paste of the cathode mixture to the cathode current collector, for example, a slit die coating method, a screen coating method, a curtain coating method, a knife coating method, a gravure coating method, and an electrostatic spraying method are exemplary examples.

The cathode can be produced by the method exemplified above.

[Separator]

As the separator, it is possible to use, for example, a material that is made of a material such as a polyolefin resin such as polyethylene or polypropylene, a fluororesin, or a nitrogen-containing aromatic polymer and has a form such as a porous film, a nonwoven fabric, or a woven fabric. In addition, the separator may be formed using two or more of these materials or the separator may be formed by laminating these materials.

In the present embodiment, the air resistance of the separator by the Gurley method specified by JIS P 8117 is preferably 50 sec/100 cc or more and 300 sec/100 cc or less and more preferably 50 sec/100 cc or more and 200 sec/100 cc or less in order to favorably transmit the electrolyte while the battery is in use (while the battery is being charged and discharged).

In addition, the porosity of the separator is preferably 30 vol% or more and 80 vol% or less and more preferably 40 vol% or more and 70 vol% or less. The separator may be a laminate of separators having different porosities.

[Electrolytic solution]

The electrolytic solution contains an electrolyte and an organic solvent.

As the electrolyte that is contained in the electrolytic solution, lithium salts such as $LiClO_4$, $LiPF_6$, $LiAsF_6$, $LiSbF_6$, $LiBF_4$, $LiCF_3SO_3$, $LiN(SO_2CF_3)_2$, $LiN(SO_2C_2F_5)_2$, $LiN(SO_2CF_3)(COCF_3)$, $Li(C_4F_9SO_3)$, $LiC(SO_2CF_3)_3$, $Li_2B_{10}Cl_{10}$, LiBOB (here, BOB represents bis(oxalato)borate), LiFSI (here, FSI represents bis(fluorosulfonyl)imide), lower aliphatic carboxylic acid lithium salts, and $LiAlCl_4$ are exemplary examples, and a mixture of two or more thereof may be used. Among these, as the electrolyte, at least one selected from the group consisting of $LiPF_6$, $LiAsF_6$, $LiSbF_6$, $LiBF_4$, $LiCF_3SO_3$, $LiN(SO_2CF_3)_2$, and $LiC(SO_2CF_3)_3$, which contain fluorine, is preferably used.

In addition, as the organic solvent that is contained in the electrolytic solution, it is possible to use, for example, carbonates such as propylene carbonate, ethylene carbonate, dimethyl carbonate, diethyl carbonate, ethyl methyl carbonate, 4-trifluoromethyl-1,3-dioxolan-2-one, and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyltetrahydrofuran; esters such as methyl formate, methyl acetate, and γ-butyrolactone; nitriles such as acetonitrile and butyronitrile; amides such as N,N-dimethylformamide and N,N-dimethylacetamide; carbamates such as 3-methyl-2-oxazolidone; sulfur-containing compounds such as sulfolane, dimethyl sulfoxide, and 1,3-propanesultone, or these organic solvents into which a fluoro group is further introduced (the organic solvents in which one or more hydrogen atoms in the organic solvent are substituted with a fluorine atom).

As the organic solvent, two or more of the above-described organic solvents are preferably used in a mixture form. Among these, a mixed solvent containing a carbonate is preferable, and a mixed solvent of a cyclic carbonate and a non-cyclic carbonate and a mixed solvent of a cyclic carbonate and an ether are more preferable. As the mixed solvent of a cyclic carbonate and a non-cyclic carbonate, a mixed solvent containing ethylene carbonate, dimethyl carbonate, and ethyl methyl carbonate is preferable. An electrolytic solution in which such a mixed solvent is used has a broad operating temperature range, is unlikely to deteriorate even when the battery is charged and discharged at a high current rate, and is unlikely to deteriorate even when used for a long period of time.

Furthermore, as the electrolytic solution, it is preferable to use an electrolytic solution containing a lithium salt containing fluorine such as $LiPF_6$ and an organic solvent having a fluorine substituent from the viewpoint of enhancing the safety of a non-aqueous electrolyte secondary battery to be obtained. Particularly, a mixed solvent containing an ether having a fluorine substituent such as pentafluoropropyl methyl ether or 2,2,3,3-tetrafluoropropyl difluoromethyl ether and dimethyl carbonate is still more preferable.

[Detailed configuration: cylindrical type]

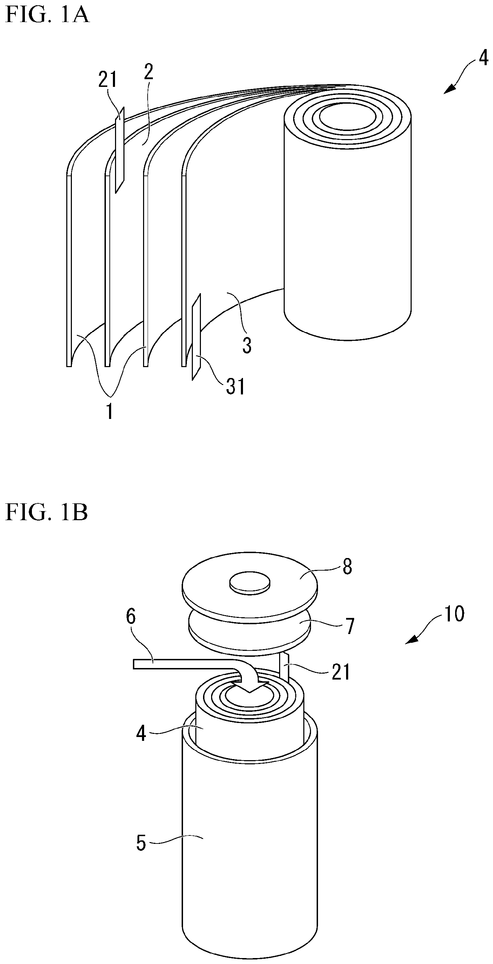

Fig. 1A and Fig. 1B are schematic views showing an example of the non-aqueous electrolyte secondary battery of the present embodiment. A cylindrical non-aqueous electrolyte secondary battery 10 of the present embodiment is produced as described below.

First, as shown in Fig. 1A, a pair of separators 1 having a strip shape, a strip-shaped cathode 2 having a cathode lead 21 at one end, and a strip-shaped current collector-integrated anode 3 having a anode lead 31 at one end are laminated in order of the separator 1, the cathode 2, the separator 1, and the current collector-integrated anode 3 and are wound to form an electrode group 4.

Next, as shown in Fig. 1B, the electrode group 4 and an insulator, not shown, are accommodated in a battery exterior body 5, and the can bottom is then sealed. The electrode group 4 is impregnated with an electrolytic solution 6, and an electrolyte is disposed between the cathode 2 and the anode 3. Furthermore, the upper portion of the battery exterior body 5 is sealed with a top insulator 7 and a sealing body 8, whereby the non-aqueous electrolyte secondary battery 10 can be produced.

As the shape of the electrode group 4, for example, a columnar shape in which the cross-sectional shape becomes a circle, an ellipse, a rectangle, or a rectangle with rounded corners when the electrode group 4 is cut in a direction perpendicular to the winding axis is an exemplary example.

In addition, as a shape of the non-aqueous electrolyte secondary battery having the electrode group 4, a shape defined by IEC60086, which is a standard for a battery defined by the International Electrotechnical Commission (IEC), or by JIS C 8500 can be adopted. For example, shapes such as a cylindrical type and a square type can be exemplary examples.

Furthermore, the non-aqueous electrolyte secondary battery is not limited to the winding-type configuration and may be a laminate-type configuration in which the laminated structure of the cathode, the separator, the anode, and the separator is repeatedly overlaid. As the laminate-type non-aqueous electrolyte secondary battery, a so-called coin-type battery, button-type battery, or paper-type (or sheet-type) battery can be an exemplary example.

In the present embodiment, the current collector-integrated anode may also serve as the battery exterior body 5. In the case of this embodiment, a separate exterior body member becomes unnecessary.

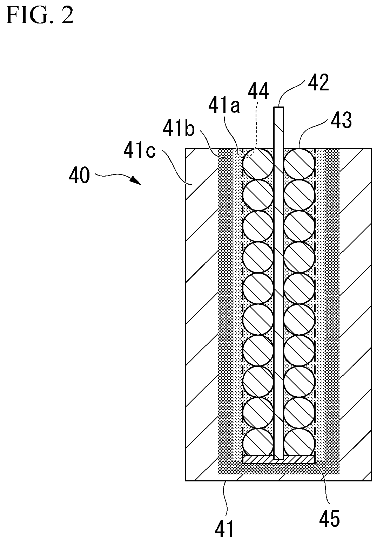

Fig. 2 is a schematic view of a cross section of the non-aqueous electrolyte secondary battery in which the current collector-integrated anode also serves as the battery exterior body. A non-aqueous electrolyte secondary battery 40 shown in Fig. 2 includes a current collector-integrated anode 41, a separator 44, a cathode current collector 42, a cathode active material 43, and an insulating layer 45.

The cathode in which the cathode active material 43 is supported by a cathode current collector 42 is accommodated in the current collector-integrated anode 41 through the separator 44. An electrolytic solution is held in the separator 44.

The current collector-integrated anode 41 includes an anode 41a that is involved in charging and discharging and functions as an anode and an anode current collector 41b that is made of a surplus metal component that is not involved in charging and discharging and functions as a current collector.

In addition, a portion that is made of a metal component that does not exhibit the functions of both the anode and the current collector and is located in the outermost layer of the non-aqueous electrolyte secondary battery 40 functions as a battery exterior body 41c.

The current collector-integrated anode 41 shown in Fig. 2 functions as each of the anode active material 41a, the anode current collector 41b, and the battery exterior body 41c from the cathode side.

The non-aqueous electrolyte secondary battery 40 is capable of reducing the weight and thickness of non-aqueous electrolyte secondary batteries.

[Film laminate type]

In the present embodiment, the non-aqueous electrolyte secondary battery may have a film laminate-type battery structure.

In this embodiment, a cathode in which a cathode active material is supported by a cathode current collector, a separator, and a film-shaped current collector-integrated anode are provided. An electrolytic solution is held in the separator.

The cathode and the current collector-integrated anode are disposed to face each other through the separator. The cathode and the current collector-integrated anode are laminated so as to be inside the battery and serve as a battery exterior. A cathode lead is connected to the cathode, and an anode lead is connected to the anode.

The current collector-integrated anode includes an anode that is involved in charging and discharging and functions as an anode and a current collector that is made of a surplus metal component that is not involved in charging and discharging and functions as a current collector. In addition, a portion that is made of a metal component that does not exhibit the functions of both the anodee and the current collector and is located in the outermost layer of the non-aqueous electrolyte secondary battery functions as a laminate battery exterior body.

In this embodiment, it is possible to reduce the weight and thickness of non-aqueous electrolyte secondary batteries.

In the non-aqueous electrolyte secondary battery of the present embodiment, the anode capacity of the current collector-integrated anode for a secondary battery and the cathode capacity of the cathode preferably satisfy the following (Equation 1).

$$\text{(Anode capacity (mAh) / Cathode capacity (mAh))} > 110\% \ldots \text{(Equation 1)}$$

Furthermore, in the non-aqueous electrolyte secondary battery of the present embodiment, the anode capacity of the current collector-integrated anode for a secondary battery and the cathode capacity of the cathode preferably satisfy the following (Equation 2).

$$\text{(Anode capacity (mAh) / Cathode capacity (mAh))} < 25000\% \ldots \text{(Equation 2)}$$

The positive-negative capacity ratio represented by the (Equation 1) or (Equation 2) is calculated by the following method.

The charge capacity of the cathode in the case of being charged until the cathode potential reaches 4.3 V with respect to lithium metal as the reference (counter electrode) is used as the denominator.

The charge capacity of the anode in the case of being charged until the anode potential reaches 0.2 V with respect to lithium metal as the reference (counter electrode) is used as the numerator.

The ratio of the anode capacity to the cathode capacity in this case is calculated.

When the positive-negative capacity ratio satisfies the (Equation 1), the capacity of the anode becomes larger than the capacity of the cathode. In this case, segregation of lithium metal in the anode can be suppressed.

When the positive-negative capacity ratio satisfies the (Equation 2), the thickness of the anode is not too thick, and the size and weight of batteries can be reduced.

The positive-negative capacity ratio preferably satisfies both the (Equation 1) and (equation 2).

[Solid electrolyte-type secondary battery]

The non-aqueous electrolyte secondary battery of the present embodiment may be a solid electrolyte-type secondary battery in which a solid electrolyte is used.

In the case of a solid electrolyte-type secondary battery, a laminate in which a current collector-integrated anode for a secondary battery, a solid electrolyte layer, and a cathode are laminated in this order is preferably provided.

In the present embodiment, the cathode preferably has voids on a surface in contact with the solid electrolyte layer.

In the present embodiment, some of the voids are preferably filled with the material that configures the solid electrolyte.

As the solid electrolyte, it is possible to use, for example, a polymer electrolyte such as a polyethylene oxide-based polymer compound or a polymer compound containing at least one or more of a polyorganosiloxane chain or a polyoxyalkylene chain. In addition, when a sulfide electrolyte such as $Na_2S$-$SiS_2$, $Na_2S$-$GeS_2$, $Na_2S$-$P_2S_5$, or $Na_2S$-$B_2S_3$, an inorganic compound electrolyte containing a sulfide such as $Na_2S$-$SiS_2$-$Na_3PO_4$ or $Na_2S$-$SiS_2$-$Na_2SO_4$, or a NASICON-type electrolyte such as $NaZr_2(PO_4)_3$ is used as the solid electrolyte, there are cases where safety can be further enhanced.

In the present embodiment, when some of the voids in the cathode are filled with the material that configures the solid electrolyte, excellent ionic conductivity can be ensured. As the ionic conductivity, lithium ion conductivity is an exemplary example.

In the present embodiment, the porosity of the cathode is preferably 10% or more and 50% or less, more preferably 20% or more and 50% or less, and particularly preferably 30% or more and 50% or less.

In addition, at least 10% of the voids in the cathode are preferably filled with the material that configures the solid electrolyte.

[Bipolar battery]

The present embodiment may be a bipolar battery in which structures having a cathode layer on a single surface of the current collector-integrated anode are laminated through a solid electrolyte layer.

In the bipolar battery of the present embodiment, a cathode layer is laminated on a single surface of the current collector-integrated anode and integrated, thereby producing an electrode structure. After that, the electrode structures and the solid electrolyte layer are sequentially overlaid and pressed, whereby the bipolar battery can be produced by simple steps.

<Method for evaluating non-aqueous electrolyte secondary battery>

[Production of current collector-integrated anode]

The current collector-integrated anode of the present embodiment cut out into a disk shape having a thickness of 100 μm and a diameter of 14 mm is prepared.

[Production of counter electrode]

A lithium foil having a purity of 99.9% (thickness 300 μm: manufactured by Honjo Chemical Corporation) is cut out into a disk shape having a diameter of 16 mm to produce a counter electrode.

[Production of electrolytic solution]

An electrolytic solution is produced by dissolving $LiPF_6$ in a mixed solvent obtained by mixing ethylene carbonate (EC) and diethyl carbonate (DEC) at a volume ratio (EC:DEC) of 30:70 so as to reach 1 mol/liter.

[Production of non-aqueous electrolyte secondary battery]

A polyethylene porous separator is disposed between the current collector-integrated anode and the counter electrode and stored in a battery case (standard 2032), the electrolytic solution is poured thereinto, and the battery case is sealed, thereby producing a coin-type (half-cell) non-aqueous electrolyte secondary battery having a diameter of 20 mm and a thickness of 3.2 mm.

[Charge and discharge evaluation: Initial charge and discharge]

The coin-type non-aqueous electrolyte secondary battery is left at room temperature for 10 hours, thereby sufficiently impregnating the separator with the electrolytic solution.

Next, constant-current constant-voltage charging by which the non-aqueous electrolyte secondary battery is constant-current-charged up to 0.005 V at room temperature and 0.5 mA up and then constant-voltage-charged at 0.005 V is carried out for five hours, and then constant-current-discharging by which the non-aqueous electrolyte secondary battery is discharged to 2.0 V at 0.5 mA is carried out, thereby carrying out initial charge and discharge.

[Charge and discharge evaluation: Initial charge and discharge efficiency]

The initial charge and discharge efficiency is calculated by the following equation.

$$\text{Initial charge and discharge efficiency } (\%)$$

$$= \text{initial discharge capacity (mAh/g)/initial charge capacity (mAh/g)} \times 100$$

In a case where the initial charge and discharge efficiency calculated by the above-shown equation is 80% or more, the initial charge and discharge efficiency is evaluated to be high.

As one aspect, the present invention also includes the following aspects.

(2-1) A method for charging a non-aqueous electrolyte secondary battery, including provision of a solid electrolyte layer in contact with a cathode and a current collector-integrated anode for a secondary battery so as to prevent short-circuiting between the cathode and the current collector-integrated anode for a secondary battery and application of a negative potential to the cathode and a positive potential to the current collector-integrated anode for a secondary battery with an external power supply, in which an anode capacity of the current collector-integrated anode for a secondary battery is larger than a cathode capacity of the cathode, the current collector-integrated anode for a secondary battery is a metal foil made of aluminum having a purity of 99 mass% or more or an alloy thereof, and the metal foil includes an oxide coating on a surface.

(2-2) The method for charging a non-aqueous electrolyte secondary battery according to (2-1), in which a thickness of the oxide coating is 3 nm or more and less than 100 nm.

(2-3) The method for charging a non-aqueous electrolyte secondary battery according to (2-1) or (2-2), in which the anode capacity of the current collector-integrated anode for a secondary battery and the cathode capacity of the cathode satisfy the following (Equation 1).

$$(\text{Anode capacity (mAh) / Cathode capacity (mAh)}) > 110\% \dots \text{(Equation 1)}$$

(2-4) The method for charging a non-aqueous electrolyte secondary battery according to any one of (2-1) to (2-3), in which the anode capacity of the current collector-integrated anode for a secondary battery and the cathode capacity of the cathode satisfy the following (Equation 2).

$$(\text{Anode capacity (mAh) / Cathode capacity (mAh)}) < 25000\% \dots \text{(Equation 2)}$$

(2-5) The method for charging a non-aqueous electrolyte secondary battery according to any one of (2-1) to (2-4), in which the current collector-integrated anode for a secondary battery serves as an exterior body.

(2-6) The method for charging a non-aqueous electrolyte secondary battery according to any one of (2-1) to (2-5), in which a separator is provided between the current collector-integrated anode for a secondary battery and the cathode.

(3-1) A method for charging a non-aqueous electrolyte secondary battery, including provision of a solid electrolyte layer in contact with a cathode and a current collector-integrated anode for a secondary battery so as to prevent short-circuiting between the cathode and the current collector-integrated anode for a secondary battery, charging of the non-aqueous electrolyte secondary battery by applying a negative potential to the cathode and a positive potential to the current collector-integrated anode for a secondary battery with an external power supply, and connection of a discharge circuit to the cathode and the current collector-integrated anode for a secondary battery of the charged non-aqueous electrolyte secondary battery, in which an anode capacity of the current collector-integrated anode for a secondary battery is larger than a cathode capacity of the cathode, the current collector-integrated anode for a secondary battery is a metal foil made of aluminum having a purity of 99 mass% or more or an alloy thereof, and the metal foil includes an oxide coating on a surface.

(3-2) The method for charging a non-aqueous electrolyte secondary battery according to (3-1), in which a thickness of the oxide coating is 3 nm or more and less than 100 nm.

(3-3) The method for charging a non-aqueous electrolyte secondary battery according to (3-1) or (3-2), in which the anode capacity of the current collector-integrated anode for a secondary battery and the cathode capacity of the cathode satisfy the following (Equation 1).

$$\text{(Anode capacity (mAh) / Cathode capacity (mAh))} > 110\% \text{ ... (Equation 1)}$$

(3-4) The method for charging a non-aqueous electrolyte secondary battery according to any one of (3-1) to (3-3), in which the anode capacity of the current collector-integrated anode for a secondary battery and the cathode capacity of the cathode satisfy the following (Equation 2).

$$\text{(Anode capacity (mAh) / Cathode capacity (mAh))} < 25000\% \text{ ... (Equation 2)}$$

(3-5) The method for charging a non-aqueous electrolyte secondary battery according to any one of (3-1) to (3-4), in which the current collector-integrated anode for a secondary battery serves as an exterior body.
(3-6) The method for charging a non-aqueous electrolyte secondary battery according to any one of (3-1) to (3-5), in which a separator is provided between the current collector-integrated anode for a secondary battery and the cathode.
(4-1) Use of a current collector-integrated anode for a current collector-integrated non-aqueous electrolyte secondary battery, in which the current collector-integrated non-aqueous electrolyte secondary battery has an electrode group provided with a current collector-integrated anode, an electrolyte, and a cathode, a anode capacity of the current collector-integrated anode is larger than a cathode capacity of the cathode, the current collector-integrated anode is a metal foil made of aluminum having a purity of 99 mass% or more or an alloy thereof, and the metal foil includes an oxide coating on a surface.
(4-2) The use according to (4-1), in which a thickness of the oxide coating is 3 nm or more and less than 100 nm.
(4-3) The use according to (4-1) or (4-2), in which the anode capacity of the current collector-integrated anode and the cathode capacity of the cathode satisfy the following (Equation 1).

$$\text{(Anode capacity (mAh) / Cathode capacity (mAh))} > 110\% \text{ ... (Equation 1)}$$

(4-4) The use according to any one of (4-1) to (4-3), in which the anode capacity of the current collector-integrated anode and the cathode capacity of the cathode satisfy the following (Equation 2).

$$\text{(Anode capacity (mAh) / Cathode capacity (mAh))} < 25000\% \text{ ... (Equation 2)}$$

(4-5) The use according to any one of (4-1) to (4-4), in which the current collector-integrated anode serves as an exterior body.
(4-6) The use according to any one of (4-1) to (4-5), in which an organic electrolytic solution in which the electrolyte is dissolved in a non-aqueous organic solvent is provided.
(4-7) The use according to any one of (4-1) to (4-6), in which a separator is provided between the current collector-integrated anode and the cathode.
(4-8) The use according to any one of (4-1) to (4-7), in which the electrolyte is a solid electrolyte, the cathode has voids on a surface in contact with the solid electrolyte, and some of the voids are filled with a material that configures the solid electrolyte.
(5-1) Use of a current collector-integrated anode for producing a non-aqueous electrolyte secondary battery, in which the non-aqueous electrolyte secondary battery has an electrode group provided with a current collector-integrated anode, an electrolyte, and a cathode, an anode capacity of the current collector-integrated anode is larger than a cathode capacity of the cathode, the current collector-integrated anode is a metal foil made of aluminum having a purity of 99 mass% or more or an alloy thereof, and the metal foil includes an oxide coating on a surface.
(5-2) The use according to (5-1), in which a thickness of the oxide coating is 3 nm or more and less than 100 nm.
(5-3) The use according to (5-1) or (5-2), in which the anode capacity of the current collector-integrated anode and the cathode capacity of the cathode satisfy the following (Equation 1).

$$\text{(Anode capacity (mAh) / Cathode capacity (mAh))} > 110\% \text{ ... (Equation 1)}$$

(5-4) The use according to any one of (5-1) to (5-3), in which the anode capacity of the current collector-integrated anode and the cathode capacity of the cathode satisfy the following (Equation 2).

$$(\text{Anode capacity (mAh)} / \text{Cathode capacity (mAh)}) < 25000\% \text{ ... (Equation 2)}$$

(5-5) The use according to any one of (5-1) to (5-4), in which the current collector-integrated anode serves as an exterior body.

(5-6) The use according to any one of (5-1) to (5-5), in which an organic electrolytic solution in which the electrolyte is dissolved in a non-aqueous organic solvent is provided.

(5-7) The use according to any one of (5-1) to (5-6), in which a separator is provided between the current collector-integrated anode and the cathode.

(5-8) The use according to any one of (5-1) to (5-7), in which the electrolyte is a solid electrolyte, the cathode has voids on a surface in contact with the solid electrolyte, and some of the voids are filled with a material that configures the solid electrolyte.

**[Examples]**

Next, the present invention will be described in more detail using examples.

«Example 1»

[Production of current collector-integrated anode]

A silicon-aluminum alloy foil was produced as a current collector-integrated anode.

The silicon-aluminum alloy foil used in Example 1 was produced by the following method.

(Casting step)

First, 4600 g of aluminum (purity: 99.99 mass% or more) and 46 g of silicon manufactured by Kojundo Chemical Lab Co., Ltd. (purity: 99.999 mass% or more) were each weighed.

Next, aluminum was melted, silicon was added thereto and heated to 760°C, and the heating temperature was held, thereby obtaining a molten silicon-aluminum alloy having a silicon content rate of 1.0 mass%.

Next, the obtained molten silicon-aluminum alloy was purified by being held at a temperature of 740°C for two hours under a condition of a vacuum degree of 50 Pa.

The molten silicon-aluminum alloy was cast using a cast iron mold (22 mm × 150 mm × 200 mm) dried at 150°C, thereby obtaining a silicon-aluminum ingot.

In order to uniform the crystal structure of the obtained silicon-aluminum ingot, a thermal treatment was carried out on the silicon-aluminum ingot in the atmosphere at 580°C for nine hours.

(Foil shape-processing step)

Next, the silicon-aluminum ingot was rolled.

The rolling was carried out under the following conditions.

First, both surfaces of the silicon-aluminum ingot were machined 2 mm.

After that, the silicon-aluminum ingot was cold-rolled from a thickness of 18 mm. The processing rate r of the cold rolling was set to 99.6%. The thickness of an obtained silicon-aluminum metal alloy foil raw material was 100 $\mu$m.

(Thermal treatment step)

The obtained silicon-aluminum metal alloy foil raw material was thermally treated at 350°C for 180 minutes in the atmosphere, thereby obtaining a silicon-aluminum alloy foil.

As a result of observing the surface of the silicon-aluminum alloy foil with a spectroscopic ellipsometer, it was possible to confirm that a uniform oxide coating having a thickness of 35 nm was formed.

The obtained silicon-aluminum alloy foil (thickness 100 $\mu$m) was cut out into a disk shape having a diameter of 14 mm, thereby producing a current collector-integrated anode.

[Production of counter electrode]

A lithium foil having a purity of 99.9% (thickness 300 $\mu$m: manufactured by Honjo Chemical Corporation) was cut out into a disk shape having a diameter of 16 mm to produce a counter electrode.

[Production of electrolytic solution]

An electrolytic solution was produced by dissolving $LiPF_6$ in a mixed solvent obtained by mixing ethylene carbonate (EC) and diethyl carbonate (DEC) at a volume ratio (EC:DEC) of 30:70 so as to reach 1 mol/liter.

[Production of non-aqueous electrolyte secondary battery]

A polyethylene porous separator was disposed between the current collector-integrated anode and the counter electrode and stored in a battery case (standard 2032), the electrolytic solution was poured thereinto, and the battery case was sealed, thereby producing a coin-type (half-cell) non-aqueous electrolyte secondary battery having a diameter of 20 mm and a thickness of 3.2 mm.

[Charge and discharge evaluation: Initial charge and discharge]

The coin-type non-aqueous electrolyte secondary battery was left at room temperature for 10 hours, thereby sufficiently impregnating the separator with the electrolytic solution.
Next, constant-current constant-voltage charging by which the non-aqueous electrolyte secondary battery was constant-current-charged up to 0.005 V at room temperature and 0.5 mA up and then constant-voltage-charged at 0.005 V was carried out for five hours, and then constant-current-discharging by which the non-aqueous electrolyte secondary battery was discharged to 2.0 V at 0.5 mA was carried out, thereby carrying out initial charge and discharge.

[Charge and discharge evaluation: Initial charge and discharge efficiency]

The initial charge and discharge efficiency was calculated by the following equation.

$$\text{Initial charge and discharge efficiency } (\%)$$

$$= \text{initial discharge capacity (mAh/g)/initial charge capacity (mAh/g)} \times 100$$

In Example 1, the initial charge and discharge efficiency calculated by the above-described method was 83%.

<<Comparative Example 1>>

A silicon-aluminum alloy foil was produced by the same method as in Example 1 except that the thermal treatment step was not carried out. It was possible to confirm by measurement using XPS that the produced silicon-aluminum alloy foil had a non-uniform natural oxide coating having a coating thickness of 1 nm to less than 3 nm on the surface.
As a result of measurement by the same method as in Example 1 using the obtained silicon-aluminum alloy foil, the initial charge and discharge efficiency was 49%.

<<Example 2>>

An aluminum foil having a purity of 99 mass% or more was produced in the same manner as in Example 1 except that only aluminum (purity: 99.99 mass% or more) was used and silicon was not used.
As a result of measuring the obtained aluminum foil using a spectroscopic ellipsometer, it was possible to confirm that a 34 nm oxide coating was provided on the surface. A coin-type (half-cell) non-aqueous electrolyte secondary battery was produced using the obtained aluminum foil and evaluated.
In Example 2, the initial charge and discharge efficiency calculated by the above-described method was 88%.

<<Comparative Example 2>>

An aluminum foil was produced by the same method as in Example 2 except that the thermal treatment step was not carried out. It was found by measurement using XPS that the produced aluminum foil had a non-uniform natural oxide coating having a coating thickness of 1 nm to less than 3 nm on the surface.
As a result of measurement by the same method as in Example 1 using the obtained aluminum foil, the initial charge and discharge efficiency was 78%.
As described above, in Examples 1 and 2, it was possible to produce the non-aqueous electrolyte secondary batteries having a higher initial charge and discharge efficiency than in Comparative Examples 1 and 2 without undergoing a complicated producing step.

[Reference Signs List]

| | |
|---|---|
| 1 and 44: | Separator |
| 2: | Cathode |
| 3: | Current collector-integrated anode |
| 4: | Electrode group |
| 5: | Battery exterior body |
| 6: | Electrolytic solution |
| 7: | Top insulator |
| 8: | Sealing body |
| 10: | Battery |
| 21: | Cathode lead |
| 31: | Anode lead |
| 40: | Non-aqueous electrolyte secondary battery |
| 41: | Current collector-integrated anode |
| 42: | Cathode current collector |
| 43: | Cathode active material |
| 45: | Insulating layer |

**Claims**

1. A non-aqueous electrolyte secondary battery comprising:

   an electrode group provided with a current collector-integrated anode for a secondary battery, an electrolyte, and a cathode,
   in which an anode capacity of the current collector-integrated anode for a secondary battery is larger than a cathode capacity of the cathode,
   the current collector-integrated anode for a secondary battery is a metal foil made of aluminum having a purity of 99 mass% or more or an alloy thereof, and
   the metal foil includes an oxide coating on a surface.

2. The non-aqueous electrolyte secondary battery according to Claim 1,
   in which a thickness of the oxide coating is 3 nm or more and less than 100 nm.

3. The non-aqueous electrolyte secondary battery according to Claim 1 or 2,

   in which the anode capacity of the current collector-integrated anode for a secondary battery and the cathode capacity of the cathode satisfy the following (Equation 1),
   (anode capacity (mAh) / cathode capacity (mAh)) > 110% ... (Equation 1).

4. The non-aqueous electrolyte secondary battery according to any one of Claims 1 to 3,

   in which the anode capacity of the current collector-integrated anode for a secondary battery and the cathode capacity of the cathode satisfy the following (Equation 2),
   (anode capacity (mAh) / cathode capacity (mAh)) < 25000% ... (Equation 2).

5. The non-aqueous electrolyte secondary battery according to any one of Claims 1 to 4,
   in which the current collector-integrated anode for a secondary battery serves as an exterior body.

6. The non-aqueous electrolyte secondary battery according to any one of Claims 1 to 5, further comprising:
   an organic electrolytic solution in which the electrolyte is dissolved in a non-aqueous organic solvent.

7. The non-aqueous electrolyte secondary battery according to any one of Claims 1 to 6, further comprising:
a separator between the current collector-integrated anode for a secondary battery and the cathode.

8. The non-aqueous electrolyte secondary battery according to any one of Claims 1 to 7,

in which the electrolyte is a solid electrolyte,
the cathode has voids on a surface in contact with the solid electrolyte, and some of the voids are filled with a material that configures the solid electrolyte.

FIG. 1A

FIG. 1B

FIG. 2

## INTERNATIONAL SEARCH REPORT

| | International application No. |
|---|---|
| | PCT/JP2020/015935 |

A. CLASSIFICATION OF SUBJECT MATTER
H01M 4/134(2010.01)i; H01M 4/38(2006.01)i; H01M 10/052(2010.01)i; H01M 10/0566(2010.01)i; H01M 2/02(2006.01)i
FI: H01M10/052; H01M4/38 Z; H01M2/02 F; H01M4/134; H01M10/0566
According to International Patent Classification (IPC) or to both national classification and IPC

B. FIELDS SEARCHED

Minimum documentation searched (classification system followed by classification symbols)
H01M4/134; H01M4/38; H01M10/052; H01M10/0566; H01M2/02

Documentation searched other than minimum documentation to the extent that such documents are included in the fields searched
| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 6442630 B1 (SUMITOMO CHEMICAL CO., LTD.) 30.11.2018 (2018-11-30) claims, paragraphs [0053], [0067]-[0075] | 1-8 |
| A | JP 2014-41722 A (TOYOTA MOTOR CORP.) 06.03.2014 (2014-03-06) claim 8, paragraphs [0002]-[0003] | 1-8 |
| A | JP 2008-287925 A (TOSHIBA CORP.) 27.11.2008 (2008-11-27) paragraphs [0027]-[0047] | 1-8 |

☐ Further documents are listed in the continuation of Box C.   ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 July 2020 (02.07.2020) | 14 July 2020 (14.07.2020) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**
Information on patent family members

International application No.

PCT/JP2020/015935

| Patent Documents referred in the Report | Publication Date | Patent Family | Publication Date |
|---|---|---|---|
| JP 6442630 B1 | 30 Nov. 2018 | JP 2019-129059 A WO 2019/146231 A1 | |
| JP 2014-41722 A | 06 Mar. 2014 | US 2015/0214549 A1 claim 8, paragraphs [0003]-[0004] WO 2014/030500 A1 KR 10-2015-0058160 A CN 104737353 A | |
| JP 2008-287925 A | 27 Nov. 2008 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019083887 A

- JP 2015018670 A